# EUROPEAN PATENT SPECIFICATION

(11) **EP 3 228 482 B1**
(45) Date of publication and mention of the grant of the patent: **23.10.2019**
(21) Application number: 17158680.3
(22) Date of filing: 01.03.2017
(51) Int. Cl.: B60C 7/10, C08J 3/24, C08K 5/098, C08K 5/14, B60C 11/00, B60C 7/18, B60C 9/18, B60C 9/22, B60C 7/14, B60C 1/00, C08L 7/00

(54) **AIRLESS TIRE**
LUFTLOSER REIFEN
PNEU SANS AIR

(30) Priority: 06.04.2016 JP 2016076786
(43) Date of publication of application: 11.10.2017
(73) Proprietor: Sumitomo Rubber Industries, Ltd., Kobe-shi, Hyogo-ken (JP)
(72) Inventor: SUGIYA, Makoto, Kobe-shi, Hyogo 651-0072 (JP); IWAMURA, Wako, Kobe-shi, Hyogo 651-0072 (JP)
(74) Representative: Manitz Finsterwald Patent- und Rechtsanwaltspartnerschaft mbB

(56) References cited:
- EP-A1- 3 135 501
- WO-A1-2012/102932
- WO-A1-2015/174313
- US-A1- 2010 018 621

## Description

### Technical Field

The present invention relates to an airless tire, more particularly to a tread ring capable of securing excellent steering stability and improved durability while reducing the rolling resistance.

### Background Art

There has been known an airless tire comprising a cylindrical tread ring providing the ground contacting surface of the tire, a hub fixed to an axle of a vehicle, and a plurality of plate-like spoke portions arranged circumferentially of the tire and extending radially to connect between the tread ring and the hub. (See Japanese Patent Application Publication No. 2008-260514)

In such airless tire, it is beneficial to form a tread rubber layer of the tread ring, which layer forms the ground contacting surface of the tire, by using rubber compounds conventionally designed for rubber members of pneumatic tires from points of view of the strength, durability, steering stability, grip performance, etc.

On the other hand, in such airless tire, the tire load and impacts during running are supported and received by the tread ring and the plate-like spoke portions, therefore their deformation becomes large when compared with a pneumatic tire in which the tire load and impacts are mainly supported and received by the internal air pressure. Accordingly, rigidity and heat generation of compounds used in the tread ring greatly affect the steering stability and the rolling resistance of the airless tire.

From such a point of view, it is desired that rubber members of the tread ring other than the tread rubber layer have higher elasticities and lower heat generating properties in comparison with rubber compounds used in pneumatic tires. In the rubber compounds conventionally used in pneumatic tires, however, the heat generation tends to increase as the elasticity increases, and therefore, a great improvement in the heat generation is difficult to be expected.

Accordingly, the present inventor has proposed to make at least one of rubber members of the tread ring other than the tread rubber layer by using a butadiene-based rubber compound [A] containing a metal salt of an alpha beta unsaturated carboxylic acid and a peroxide. The rubber compound [A] is capable of high elasticity and low heat generation which are difficult to achieve in conventional sulfur-vulcanized rubber compounds.

However, between a rubber member made of the rubber compound [A] and an adjacent rubber compound having a different rubber composition, if there are large differences with respect to the elasticity and elongation, then there is a possibility that separation and breakage occur in their interface, which causes a problem in the durability.
Further, when the rubber compound [A] contacts with a rubber compound containing sulfur, a part of the sulfur in the adjacent rubber compound migrates to the rubber compound [A] during vulcanization, and thereby the peroxide in the uncured rubber compound [A] is deactivated. As a result, there is a possibility that the intended physical properties are not obtained from the rubber compound [A], and thereby the excellent high elasticity and low heat generating property are not obtained sufficiently.
In WO 2015/174313 A1 an airless tire according to the preamble of claim 1 is disclosed.
A further airless tire is disclosed in EP 3 135 501 A1 which is prior art under Article 54(3) EPC.

### Summary of the Invention

It is therefore, an object of the present invention to provide an airless tire, in which although a rubber compound [A], which comprises butadiene rubber, a metal salt of an alpha beta unsaturated carboxylic acid and a peroxide, is used as a reinforcing rubber layer of a tread ring, the migration of sulfur from an adjacent rubber compound to the reinforcing rubber layer is suppressed to avoid the degradation of the physical properties of the rubber compound [A], and the original high elasticity and low heat generating property can be derived from the rubber compound [A] so as to exert the excellent steering stability and the low rolling resistance performance, and further
the separation from the adjacent rubber compound is suppressed to improve the durability.

According to the present invention, an airless tire comprises
a cylindrical tread ring proving the a ground contacting surface of the tire,
a hub disposed radially inside the tread ring and fixed to an axle of a vehicle, and
spokes connecting between the tread ring and the hub, wherein
the tread ring comprises a tread rubber layer forming the ground contacting surface, and a reinforcing rubber layer disposed radially inside the tread rubber layer,
the reinforcing rubber layer is made of a rubber compound [A] comprising: 100 parts by mass of the rubber component containing 10 to 100 % by mass of butadiene rubber; 10 to 80 parts by mass of a metal salt of an alpha beta unsaturated carboxylic acid; and a peroxide,
an adjacent rubber compound, which is made from a sulfur-vulcanized rubber compound using sulfur as a vulcanizing agent, is disposed adjacent to the reinforcing rubber layer, and comprises 0.5 to 10.0 part by weight of sulfur with respect to 100 parts by mass of the rubber component and
a barrier layer, which is formed from a rubber-based adhesive or a resin-based adhesive and restrains a part of the sulfur in the adjacent rubber compound from migrating into the reinforcing rubber layer during vulcanization, is disposed between the reinforcing rubber layer and the adjacent rubber compound.

In the airless tire according to the present invention, it is preferable that the adhesive from which the barrier layer is formed is a vulcanizing adhesive.

In the airless tire according to the present invention, it is preferable that the thickness of the barrier layer is in a range from 1 to 100 micrometers.

In the airless tire according to the present invention, it is preferable that the barrier layer is disposed over at least 90 % (in area) of the entire interface between the reinforcing rubber layer and the adjacent rubber compound.

In the airless tire according to the present invention, it is preferable that the tread ring comprises a radially outer reinforcing cord layer disposed radially outside the reinforcing rubber layer, and a radially inner reinforcing cord layer disposed radially inside the reinforcing rubber layer.

Therefore, in the airless tire according to the present invention, the rubber compound [A] containing the butadiene-based rubber, the metal salt of an alpha beta unsaturated carboxylic acid, and the peroxide is used for the reinforcing rubber layer of the tread ring as mentioned above.
In the rubber compound [A], the butadiene rubber is co-crosslinked with the metal salt by being initiated with the peroxide working as an initiator, and as a result, physical properties excellent in the elasticity and low internal energyloss property can be obtained. Thereby, the excellent steering stability and low rolling resistance performance or low fuel consumption property can be given to the airless tire.

The barrier layer restrains a part of the sulfur in the adjacent rubber compound from migrating into the reinforcing rubber layer during the vulcanization, and the peroxide can be restrained from being deactivated by the migrated sulfur. As a result, the rubber compound [A] can realize its original rubber properties (high elasticity and low heat generation) and can help to exert the above mentioned excellent steering stability and the low rolling resistance performance.

Further, the barrier layer suppresses the separation between the reinforcing rubber layer and the adjacent rubber compound due to a difference in the elasticity and so on between them, and therefore the durability of the airless tire can be improved.

Incidentally, the rubber compound [A] is tend to be less excellent in the extensibility or stretchability and the tensile strength in comparison with the usual rubber compounds used in pneumatic tires. However, this problem of the extensibility and the tensile strength can be solved if the reinforcing rubber layer made from the rubber compound [A] is sandwiched between the outer reinforcing cord layer and the inner reinforcing cord layer.

### Brief Description of the Drawings

Fig. 1 is a perspective view of an airless tire as an embodiment of the present invention.
Fig. 2 is a perspective view of the tread ring in Fig. 1.
Fig. 3 is a cross-sectional view of the tread ring in Fig. 2.
Fig. 4 is a magnified cross-sectional partial view of the barrier layer and the reinforcing rubber layer.
Fig. 5 is a perspective view of a tread ring showing another example of the inner reinforcing cord layer.
Fig. 6 is a perspective view of a tread ring showing another example of the outer reinforcing cord layer.
Fig. 7 is a perspective view of a tread ring showing yet another example of the outer reinforcing cord layer.

### Description of the Preferred Embodiments

Embodiments of the present invention will now be described in detail in conjunction with accompanying drawings.

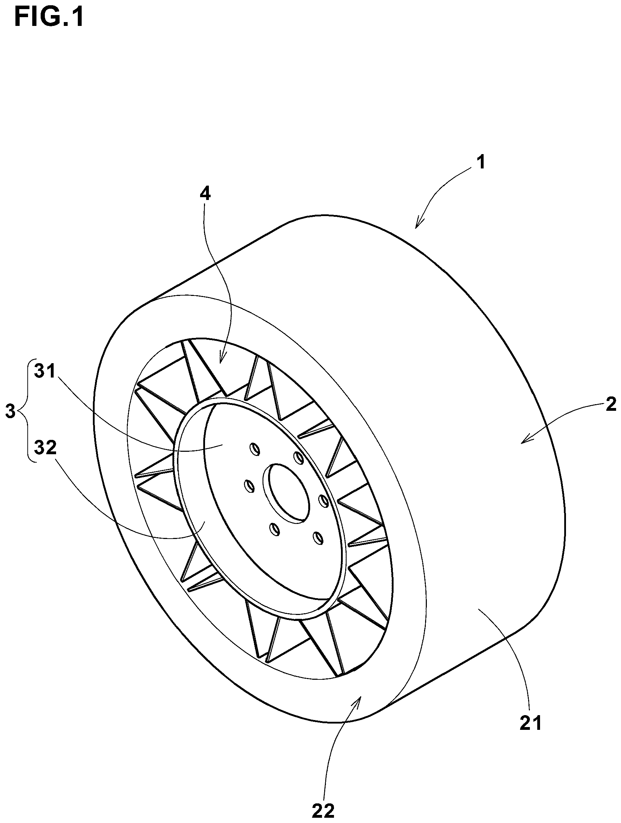

As shown in Fig. 1, an airless tire 1 as an embodiment of the present invention comprises a cylindrical tread ring 2 provided with a ground contacting surface 21, a hub 3 disposed radially inside the tread ring 2 and fixed to an axle of a vehicle, and spokes 4 connecting between the tread ring 2 and the hub 3.
The airless tire 1 in the present embodiment is designed for passenger cars.

The hub 3 comprises a disc portion 31 fixed to an axle of a vehicle, and a cylindrical portion 32 formed on the circumference of the disc portion 31.
The hub 3 can be made of a metal material, for example, steel, aluminum alloy, magnesium alloy and the like as with conventional tire wheels.

The spokes 4 are formed by cast or injection molding using a high-polymer material. Each spoke 4 has a plate-like shape and the spokes are arranged circumferentially of the tire.

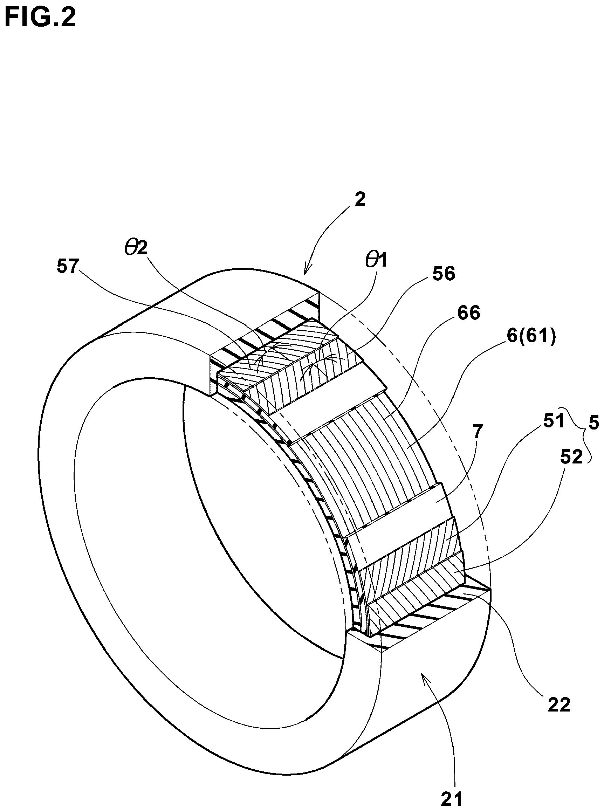

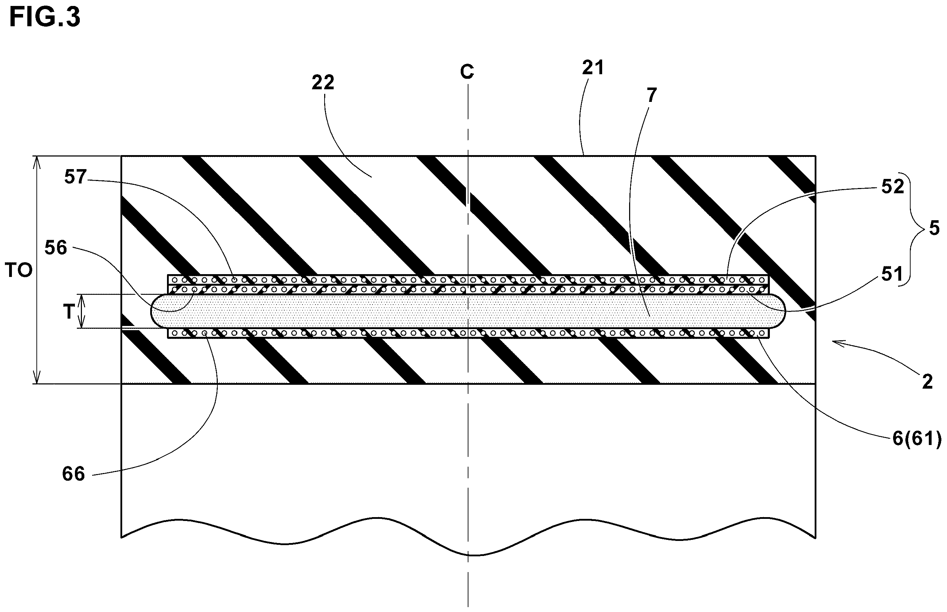

As shown in Figs 2 and 3, the tread ring 2 comprises a tread rubber layer 22 forming the ground contacting surface 21, and a reinforcing rubber layer 7 disposed radially inside the tread rubber layer 22.
Further, the tread ring 2 in this embodiment comprises an outer reinforcing cord layer 5 disposed radially outside the reinforcing rubber layer 7, and an inner reinforcing cord layer 6 disposed radially inside the reinforcing rubber layer 7.
That is, the reinforcing rubber layer 7 is sandwiched between the outer reinforcing cord layer 5 and the inner reinforcing cord layer 6.
In this embodiment, the rubber compound of the tread rubber layer 22 is extended radially inwardly through both side of the assembly of the reinforcing rubber layer and the outer and inner reinforcing cord layers to the radially inside of the inner reinforcing cord layer as shown in Fig. 3, therefore, the assembly is embedded in the tread rubber compound.

In the ground contacting surface 21 formed by the radially outer surface of the tread ring 2, tread grooves (not shown) of various patterns can be formed in order to provide the wet performance, road grip performance and the like. For the tread rubber layer 22, a rubber compound which excels in the wear resistance and the frictional force when contacting with the ground is suitably used.

In this embodiment, the number of ply in the radially outer reinforcing cord layer 5 is larger than the number of ply in the radially inner reinforcing cord layer 6 in order that the rigidity of the ground contacting surface 21 is increased by the outer layer 5, and the increase in the tire weight due to the layers 5 and 6 is suppressed by the inner layer 6.

The outer reinforcing cord layer 5 is composed of a first cord ply 51 and a second cord ply 52 disposed on the radially outer side of the first cord ply 51.

The axial width of the first cord ply 51 is set to be substantially the same as the axial width of the second cord ply 52. Here, the expression "substantially the same" means the difference between the axial widths is at most 10 mm. In this embodiment, the difference is zero.

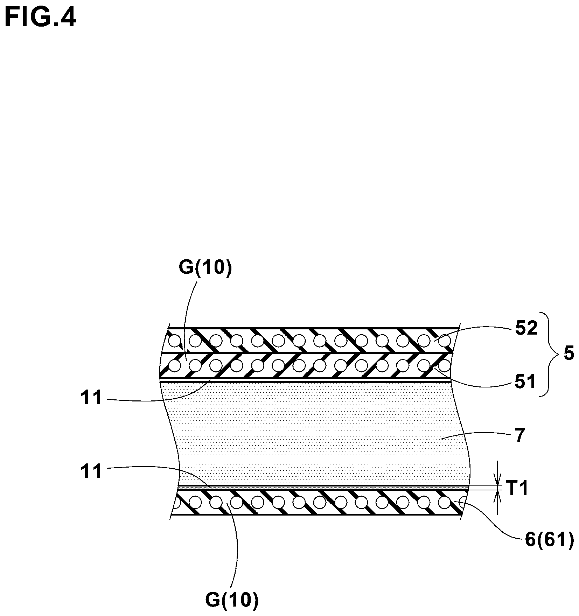

The first cord ply 51 is composed of first reinforcing cords 56 which are laid parallel with each other and obliquely at an angle θ1 with respect to the tire circumferential direction, and are coated with a topping rubber G (shown in Fig. 4).

The second cord ply 52 is composed of second reinforcing cords 57 which are laid parallel with each other and obliquely at an angle θ2 with respect to the tire circumferential direction, and are coated with a topping rubber G. The inclination angle θ1 and the inclination angle θ2 are equal to each other in respect of the absolute values, but, the inclining directions are opposite to each other.

For the first reinforcing cords 56 and the second reinforcing cords 57, cords made of materials similar to those used for tread reinforcing belt cords of a pneumatic tire, for example, steel cords can be suitably used. But, as required, high modulus organic fiber cords, e.g. aramid cords, polyethylene naphthalate (PEN) cords, polyethylene terephthalate (PET) cords, etc. can be used.

The first reinforcing cords 56 cross the second reinforcing cords 57 to increase the rigidity of the outer reinforcing cord layer 5, therefore, the tread ring 2 is reinforced effectively.
Further, when a slip angle is given to the airless tire 1, the outer reinforcing cord layer 5, which has high resistance to in-plane torsion, can generate cornering power, and thereby excellent cornering performance can be brought about.

The inner reinforcing cord layer 6 is composed of a third cord ply 61 of third reinforcing cords 66 laid parallel with each other and coated with a topping rubber G (shown in Fig. 4).

In this embodiment, the third reinforcing cords 66 are substantially parallel with the tire circumferential direction. Here, the expression "substantially parallel" means that the angle θ3 (not shown) of the third reinforcing cords 66 with respect to the tire circumferential direction is in a range from -5 to +5 degrees, wherein the plus (+) and minus (-) signs mean the angle is clockwise and counter-clockwise or vice versa.

For the third reinforcing cords 66, steel cords can be suitably used. But, high modulus organic fiber cords, e.g. aramid cords, polyethylene naphthalate (PEN) cords, polyethylene terephthalate (PET) cords, etc. can be used as required.

The third reinforcing cords 66 can be formed by spirally winding a single third reinforcing cord 66 or plural cords 66. In this case, particularly in the case of the inner reinforcing cord layer 6 composed of the spirally wound single cord 66, the expression "third reinforcing cords 66" of the inner reinforcing cord layer 6 should be read as "turns or windings of the spirally wound third reinforcing cord 66" of the inner reinforcing cord layer 6.

Owing to the third reinforcing cords 66 of the inner reinforcing cord layer 6, the tread ring 2 is increased in the rigidity in the tire circumferential direction. Thereby, the shape of the ground contacting surface 21 is stabilized during deceleration and acceleration, and the brake performance and the traction performance are improved.

Further, since the inner reinforcing cord layer 6 is composed of the singe ply 61 of the cords 66 laid parallel with the tire circumferential direction, the inner reinforcing cord layer 6 can achieve a weight reduction and a symmetrical reinforcing structure about the tire equator or tire circumferential line.

In the tread ring 2 in this embodiment, the outer reinforcing cord layer 5, the inner reinforcing cord layer 6, and the reinforcing rubber layer 7 disposed therebetween constitute a sandwich configuration as shown in Fig. 3. Thereby, the outer reinforcing cord layer 5 and the inner reinforcing cord layer 6 disposed on both sides of the reinforcing rubber layer 7 can withstand tensile and compressive forces generated in the tread ring 2 when loaded. Therefore, it is possible to suppress the deformation of the tread ring 2.

In order to secure the better steering stability by increasing the above-mentioned functions sufficiently and also to decrease the rolling resistance, the reinforcing rubber layer 7 is made of the following rubber compound [A].

The rubber compound [A] comprises: 100 parts by mass of the rubber component containing 10 to 100 % by mass of butadiene rubber (BR); 10 to 80 parts by mass of a metal salt of an alpha beta unsaturated carboxylic acid; and a peroxide. In the rubber compound [A], the butadiene rubber (BR) is co-cross-linked with the metal salt of an alpha beta unsaturated carboxylic acid by being initiated with the peroxide which works as an initiator, therefore, high elasticity and low heat generation, which are difficult to obtain in the sulfur vulcanized rubber, can be obtained. Especially, when the rubber compound [A] is used in the tread ring 2 of the airless tire 1, great effects can be produced on the steering stability and the low rolling resistance performance.

The rubber component of the rubber compound [A] contains 10 to 100 % by mass of the butadiene rubber (BR). when the content of the butadiene rubber is less than 100 % by mass, in other words, when the rubber component is a blend of the butadiene rubber and rest, the rest may be natural rubber (NR), styrene-butadiene rubber (SBR), isoprene rubber (IR), chloroprene rubber (CR), styrene-isoprene-butadiene rubber (SIBR), styrene-isoprene rubber (SIR), epoxydized natural rubber (ENR), etc., alone or in combination of two or more of them. Among them, natural rubber (NR) is preferred because of the excellent low heat generating property.

The content of the butadiene rubber (BR) in the rubber component is not less than 10 % by mass, preferably not less than 20 % by mass.
If the content is less than 10 % by mass, the effect on the lowering of the heat generation tends to decrease. If the content of the butadiene rubber (BR) is 100 % by mass, the strength tends to decrease. Therefore, the content of the butadiene rubber (BR) is preferably not more than 90 % by mass, more preferably not more than 80 % by mass.

The above-mentioned metal salt of an alpha beta unsaturated carboxylic acid which is used as the co-cross-linking agent, is a metal salt of an alpha beta unsaturated carboxylic acid such as acrylic acid, methacrylic acid, maleic acid, fumaric acid, itaconic acid, etc.
For the good durability, a metal salt of acrylic acid and/or a metal salt of methacrylic acid can be preferably employed. Among them, a metal salt of methacrylic acid is more preferred. As to the metal of the metal salt of an alpha beta unsaturated carboxylic acid, zinc, sodium, magnesium, calcium, aluminum and the like can be used. Among them, zinc is preferred for the reason that sufficient hardness can be obtained.

The content of the co-cross-linking agent (a metal salt of an alpha beta unsaturated carboxylic acid) is in a range from 10 to 80 parts by mass with respect to 100 parts by mass of the rubber component.
If the content is less than 10 parts by mass, sufficient cross-linking density is not obtained. If the content is more than 80 parts by mass, the hardness is excessively increased and the strength is decreased.
From these points of view, the content of the metal salt of an alpha beta unsaturated carboxylic acid is preferably not less than 12 parts by mass and preferably not more than 50 parts by mass, more preferably not more than 35 parts by mass.

As to the peroxide, for example, benzoyl peroxide; dicumyl peroxide; di-t-butyl peroxide; t-butyl cumyl peroxide; methyl ethyl ketone peroxide; cumene hydroperoxide; 2,5-dimethyl-2,5-di(t-butylperoxy)hexane; 2,5-dimethyl-2,5-di(benzoylperoxy)hexane; t-butyl peroxybenzene; 2,4-dichlorobenzoyl peroxide; 1,1-di-t-butylperoxy-3,3,5-trimethylcyclohexane; n-butyl-4,4-di-t-butylperoxyvalerate; etc., can be used alone or in combination of two or more of them. Among them, dicumyl peroxide is preferred.

The content of the peroxide is preferably in a range from 0.1 to 6.0 parts by mass with respect to 100 parts by mass of the rubber component.
If the content is less than 0.1 parts by mass, there is a tendency that sufficient hardness is not obtained. If the content is more than 6 parts by mass, the cross-linking density is excessively increased and the strength tends to decrease. From these points of view, the content of the peroxide is more preferably not less than 0.2 parts by mass and more preferably not more than 2 parts by mass.

The rubber compound [A] may include reinforcing filler. As to the reinforcing filler, for example, carbon black, silica, calcium carbonate, clay, talc, alumina, aluminum hydroxide, etc., can be used. Among them, carbon black is preferred. If the rubber compound [A] includes the reinforcing filler, it is preferable that the content of the reinforcing filler is not more than 90 parts by mass, more preferably not more than 50 parts by mass with respect to 100 parts by mass of the rubber component. If the content of the reinforcing filler is more than 90 parts by mass, there is a possibility that the excellent low heat generating property cannot be obtained.

Aside from the above-mentioned rubber component, co-cross-linking agent (a metal salt of an alpha beta unsaturated carboxylic acid), peroxide and reinforcing filler, the rubber compound [A] may include compounding ingredients conventionally used in the tire industry, for example, zinc oxide, wax, stearic acid, oil, anti-oxidant, vulcanizing accelerator, etc., as far as the effects of the present invention is not impaired. Note that the rubber compound [A] does not include a vulcanizing agent such as sulfur and sulfur compound.

In comparison with a sulfur-vulcanized rubber compound, the rubber compound [A] has a tendency to have less favorable stretchability and tensile strength.
However, in this embodiment, since the reinforcing rubber layer 7 made of the rubber compound [A] is sandwiched between the outer reinforcing cord layer 5 and the inner reinforcing cord layer 6, namely, the reinforcing rubber layer 7 is disposed in a neutral position from both of the tension and the compression, the problems with the stretchability and the tensile strength are solved. That is, owing to such sandwich configuration, it is possible that the advantages of the rubber compound [A] are exerted effectively while the disadvantages of the rubber compound [A] are overcome.

It is preferred that the thickness T (shown in Fig. 3) of the reinforcing rubber layer 7 is not less than 3 mm. If less than 3 mm, sufficient rigidity is not obtained in the tread ring 2 and therefore the steering stability is deteriorated. Further, it is preferred that the thickness T of the reinforcing rubber layer 7 is not more than 70 % of the overall thickness T0 of the tread ring 2. If more than 70 %, the rigidity of the tread ring 2 becomes too high, which causes unfavorable running performances such as deterioration in vibration characteristics, cornering characteristics and so on.

If a rubber member 10 made of a sulfur-vulcanized rubber compound is disposed adjacently to the reinforcing rubber layer 7, there is a possibility that, during vulcanization, a part of the sulfur in the adjacent rubber compound 10 migrates into the reinforcing rubber layer 7 made of the rubber compound [A], and the peroxide is deactivated. As a result, the intended rubber physical properties are not obtained, and there is a possibility that the above-described excellent high elasticity and low heat generating property are not obtained sufficiently.

In this embodiment, the adjacent rubber compound 10 is the above-mentioned topping rubber G, and according to the present invention the adjacent rubber compound 10 comprises 0.5 to 10.0 part by weight of sulfur with respect to 100 parts by mass of the rubber component.
If the sulfur content is less than 0.5 parts by mass, it is difficult to obtain the necessary rubber physical properties. On the other hand, if the sulfur content is more than 10.0 parts by mass, problems occur in the processability and the rubber physical properties.

According to the present invention, in order to prevent the migration of the sulfur from the adjacent rubber compound 10 to the reinforcing rubber layer 7, a barrier layer 11 is disposed therebetween. The barrier layer 11 is formed from a rubber-based adhesive or a resin-based adhesive, and the adhesive is preferably a vulcanizing adhesive.

The vulcanizing adhesive can be arbitrarily selected according to the kind of the rubber compound and use conditions. For example, Chemlok adhesives manufactured by Lord corporation, Metaloc adhesives manufactured by Toyokagaku Kenkyusho Co., Ltd., and the like can be employed. In the series of Chemlok adhesives, product numbers 6225, 6125, etc. are preferred.

The barrier layer 11 can restrain the peroxide from being deactivated by the migrated sulfur so that the rubber compound [A] exerts its original rubber physical properties (high elasticity and low heat generation).
Further, the barrier layer 11 can suppress the separation between the reinforcing rubber layer 7 and the adjacent rubber compound 10 due to the difference in the elasticity and so on between them by its adhesive function. Therefore it is possible to improve the durability of the airless tire 1.

It is preferred that the thickness T1 of the barrier layer 11 is in a range from 1 to 100 micrometers. If less than 1 micrometer, its barrier effect (the suppression of the sulfur migration) is not fully exerted.
If more than 100 micrometers, the strength of the barrier layer 11 itself becomes a problem, and the barrier layer 11 itself becomes more likely to break.
Therefore, it is preferable that the thickness T1 is not less than 3 micrometers and not more than 50 micrometers.

It is preferred that the barrier layer 11 is disposed over at least 90 % (in area) of the entire interface between the reinforcing rubber layer 7 and the adjacent rubber compound 10. If less than 90 %, the adhesive strength is decreased, and the durability is negatively affected. Further, the modulus of elasticity is partially decreased, and there is a possibility that the steering stability is negatively affected.

Incidentally, the barrier layer 11 is formed as follows. In the process for forming the unvulcanized tread ring 2, the vulcanizing adhesive is applied evenly over the surface of the unvulcanized reinforcing rubber layer 7 or the surface of the unvulcanized adjacent rubber compound 10 by using a brush, a roller, a spray gun or the like.
Then, after the vulcanizing adhesive is dried, the tread ring 2 having the applied reinforcing rubber layer 7, etc. is vulcanization molded to form the tread ring 2 having the barrier layer 11.
Incidentally, it is preferred that the vulcanizing adhesive is applied over the surface of the reinforcing rubber layer 7. The reason for this is that the rubber compound [A] has a faster vulcanizing speed than the sulfur-vulcanized rubber compound, therefore, it is necessary to infiltrate the vulcanizing adhesive into the rubber compound [A] in advance in order to make the adhesive reaction progress quickly.

Next, an airless tire 1 as a second embodiment of the present invention will be described.
The difference of the second embodiment from the former first embodiment resides in the inner reinforcing cord layer 6. Otherwise, the first and second embodiments are the same.

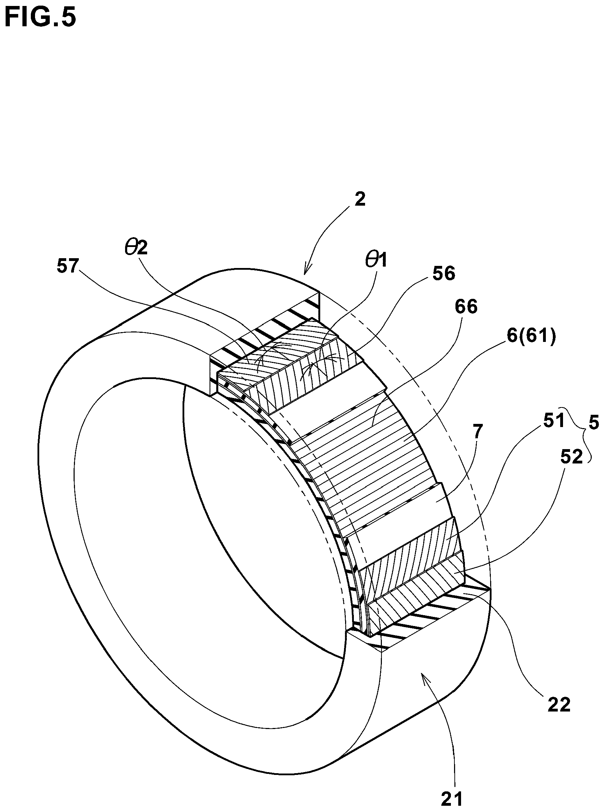

Fig. 5 shows the inner reinforcing cord layer 6 in the second embodiment, wherein the third reinforcing cords 66 of the third cord ply 61 constituting the inner reinforcing cord layer 6 are laid in substantially parallel with the tire axial direction. Here, the expression "arranged in substantially parallel with the tire axial direction" means that the angle θ3 (not shown) of the third reinforcing cord 66 is within a range of 90+/-5 degrees with respect to the tire circumferential direction.

Owing to the third reinforcing cords 66 laid parallel with the tire axial direction, the rigidity of the tread ring 2 in the tire axial direction is increased. Therefore, the shape of the ground contacting surface 21 is stabilized and maintained even if a large slip angle is give to the airless tire 1. Further, the inner reinforcing cord layer 6 can secure symmetry about the tire equator or a tire circumferential direction line, while achieving a weight reduction owing to the single ply configuration of the third cord ply 61.

Incidentally, it is important for each of the outer reinforcing cord layer 5 and the inner reinforcing cord layer 6 to be structurally symmetrical about the tire circumferential direction line (tire equator). If not symmetrical, the tread ring 2 becomes deformed asymmetrically when the tire load is applied thereto due to the torsional strain of the outer reinforcing cord layer 5 and the inner reinforcing cord layer 6, which results in a difficulty in smooth rolling.

In a pneumatic tire, the angles of belt cords with respect to the tire circumferential direction are limited within specific ranges in order to avoid unwanted expansion of the tread portion due to the tire inflation pressure.

On the other hand, in the airless tire 1, there is no need to consider the tire inflation pressure. Therefore, it is possible to set the angles θ1 and θ2 of the first and second reinforcing cords 56 and 57 in wide ranges. Specifically, the angles θ1 and θ2 can be set in a range from 5 to 85 degrees. If the angles θ1 and θ2 are less than 5 degrees, the tread ring 2 becomes deficient in the rigidity in the tire axial direction, and there is a possibility that the cornering performance is negatively affected.
If the angles θ1 and θ2 are larger than 85 degrees, the tread ring 2 becomes deficient in the rigidity in the tire circumferential direction, and there is a possibility that the straight running performance and the cornering performance when the slip angle is small are negatively affected.

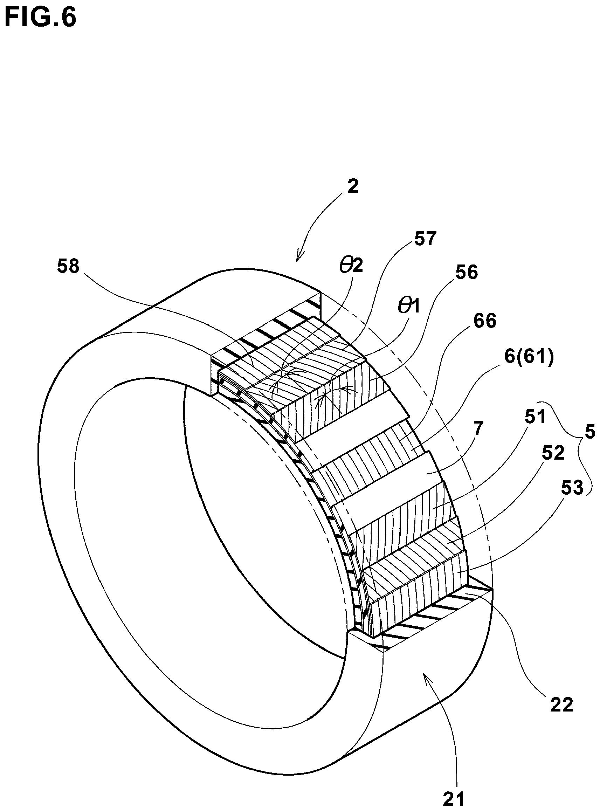

In the former embodiments, the second cord ply 52 is radially outermost in the outer reinforcing cord layer 5. However, on the radially outside of the second cord ply 52, at least one additional cord ply may be disposed, for example as shown in Fig. 6.

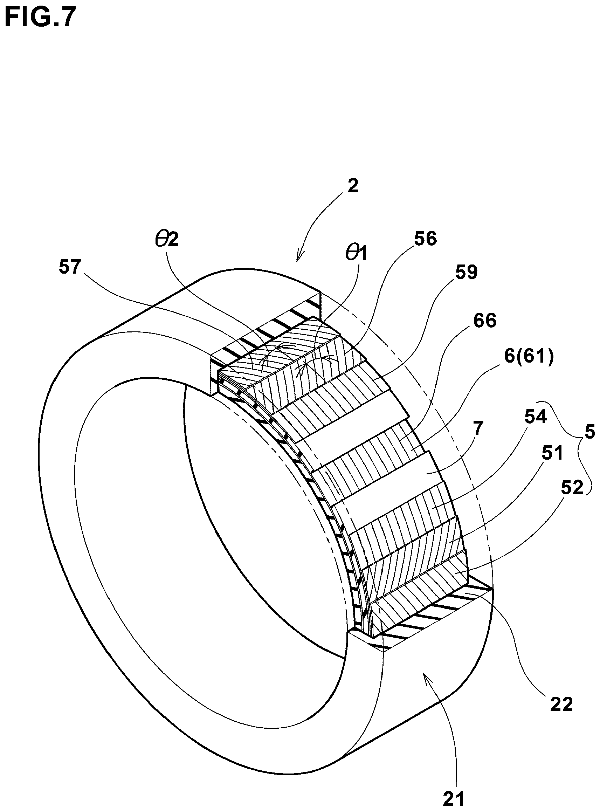

In the former embodiments, the first cord ply 51 is radially innermost in the outer reinforcing cord layer 5. However, on the radially inside of the first cord ply 51, at least one additional cord ply may be disposed, for example as shown in Fig. 7.

Such additional cord ply further reinforces the tread ring 2, and increases the load bearing capacity of the airless tire 1, therefore, it is suitably employed for tires to which a large tire load is applied such as tires for commercial vehicles, for example.

In Fig. 6 showing an airless tire 1 as a third embodiment of the present invention, the outer reinforcing cord layer 5 further includes a fourth cord ply 53 disposed on the radially outer side of the second cord ply 52. Except for the outer reinforcing cord layer 5, the third embodiment may be the same as the former embodiments.

The fourth cord ply 53 includes fourth reinforcing cords 58 laid substantially parallel with the tire circumferential direction, namely, the angle θ4 (not shown) of the fourth reinforcing cords 58 is within a range of 0+/-5 degrees with respect to the tire circumferential direction as with the third reinforcing cords 66.
The fourth reinforcing cords 58 laid as such increase the rigidity of the tread ring 2 in the tire circumferential direction. Thereby, the shape of the ground contacting surface 21 is stabilized during deceleration and acceleration, therefore, the brake performance and the traction performance are improved.

It is preferable that the first and the second reinforcing cords 56 and 57 have an elastic modulus E0, and the fourth reinforcing cords 58 have an elastic modulus E4 not more than the elastic modulus E0.
If the elastic modulus E4 is more than the elastic modulus E0, the fourth cord ply 53 becomes a working ply, and as a result, when a slip angle is given to the airless tire 1, the cornering power cannot be sufficiently generated, which negatively affects the cornering performance.
As to the fourth reinforcing cords 58, for example, organic fiber cords such as Nylon cords can be suitably used.

Fig. 7 shows an airless tire 1 as a fourth embodiment of the present invention.
Except for the outer reinforcing cord layer 5, the fourth embodiment may be the same as the former embodiments. In this embodiment, the outer reinforcing cord layer 5 further includes a fifth cord ply 54 disposed on the radially inner side of the first cord ply 51.

The fifth cord ply 54 includes fifth reinforcing cords 59 laid substantially parallel with the tire circumferential direction, namely, the angle θ5 of the fifth reinforcing cords 59 is within a range of 0+/-5 degrees with respect to the tire circumferential direction as with the third reinforcing cords 66. The fifth reinforcing cords 59 laid as such increase the rigidity of the tread ring 2 in the tire circumferential direction. Thereby, the shape of the ground contacting surface 21 is stabilized during deceleration and acceleration, therefore, the brake performance and the traction performance are improved.

As a fifth embodiment (not shown) of the present invention, a combination of the embodiments shown in Figs. 6 and 7 is possible, i.e. the outer reinforcing cord layer 5 includes the above-mentioned fourth cord ply 53 disposed radially outside the second cord ply 52 and the above-mentioned fifth cord ply 54 disposed radially inside the first cord ply 51. Except for the outer reinforcing cord layer 5, the fifth embodiment may be the same as the former embodiments.

while detailed description has been made of the especially preferred embodiments of the present invention, the present invention can be embodied in various forms without being limited to the illustrated specific embodiments.

### Comparison Tests

Based on the structure shown in Figs. 1 and 2, airless tires were experimentally manufactured as test tires (Working examples Ex1-Ex11 and Comparative example Ref1-Ref2) and tested for the steering stability, rolling resistance performance and durability.
All of the airless tires had a tire size corresponding to a pneumatic tire size 145/70R12.
In the working example Ex11, the reinforcing rubber layer was disposed on the radially inside of the inner reinforcing cord layer, and the outer reinforcing cord layer and the inner reinforcing cord layer were disposed adjacently to each other. As for the other examples Ex1-Ex10 and Ref1-Ref2, the reinforcing rubber layer was sandwiched between the outer reinforcing cord layer and the inner reinforcing cord layer.

The test tires had substantially the same specifications except for the tread ring. The spokes were made of urethane resin (thermosetting resin) and integrated with the tread ring and the hub through a cast or injection mold technique.

The outer reinforcing cord layer and the inner reinforcing cord layer had the following common specifications.

### < Outer Reinforcing Cord Layer >

Reinforcing cords: steel cords
Number of plies: 2
Angle of the cords: +21 degrees and -21 degrees

### < Inner Reinforcing Cord Layer >

Reinforcing cord: steel cord
Number of plies: 2 (spirally wound in double layers)
Angle of the cord: substantially 0 degree

### < Tread Ring >

Overall thickness T0: 25 mm

### < Barrier Layer >

vulcanizing adhesive: Chemlok adhesive PN 6225

### 1. Steering Stability

The test tires were mounted on the four wheels of a test car (compact EV, trade name: Coms). Then, during the test car running on a dry asphalt road surface of a test course with the driver being the only person in the car, the driver evaluated the steering stability.
The results are indicated in Table 1 by an index based on the comparative example Ref1 being 100, wherein the larger numeric value is better.

### 2. Rolling Resistance Performance

Using a rolling resistance testing machine, the rolling resistance coefficient (rolling resistance / load x 10⁴) was measured at a speed of 40 km/h and a load of 1 kN. The results are indicated in Table 1 by an index based on the comparative example Ref1 being 100, wherein the smaller numeric value is better.

### 3. Durability

using a tire test drum, the test tires were run at a speed of 60 km/h and a load of 1 kN. The running distance until damage occurred in the tread ring was measured as the durability. The results are indicated in Table 1 by an index based on the comparative example Ref1 being 100, wherein the larger numeric value is better.

**Table 1**

| | Ref1 | Ref2 | Ex1 | Ex2 | Ex3 | Ex4 | Ex5 | Ex6 | Ex7 | Ex8 | Ex9 | Ex10 | Ex11 |
|---|---|---|---|---|---|---|---|---|---|---|---|---|---|
| <Reinforcing Rubber Layer> | | | | | | | | | | | | | |
| position | between outer and inner reinforcing cord layers | | | | | | | | | | | | radially inside inner reinforcing cord layer |
| rubber composition | rubber compound B | rubber compound [A] | | | | | | | | | | | |
| thickness T(mm) | 4.0 | 4.0 | 4.0 | 4.0 | 4.0 | 4.0 | 4.0 | 4.0 | 4.0 | 4.0 | 4.0 | 4.0 | 4.0 |
| <Adjacent Rubber> | Topping Rubber | | | | | | | | | | | | |
| rubber composition | rubber compound B | | | | | | | | | | | | |
| <Barrier Layer> | | | | | | | | | | | | | |
| thickness T1(micrometer) | 0 | 0 | 0.5 | 3 | 50 | 80 | 100 | 120 | 200 | 50 | 50 | 50 | 50 |
| formed Area (%) *1 | 0 | 0 | 100 | | | | | | | 100 | 80 | 90 | 100 |
| applied surface *2 | - | - | reinforcing rubber layer | | | | | | | adjacent rubber | reinforcing rubber layer | | |
| Steering stability | 100 | 105 | 108 | 115 | 120 | 117 | 116 | 114 | 114 | 120 | 118 | 120 | 114 |
| Rolling resistance | 100 | 98 | 94 | 91 | 80 | 80 | 80 | 80 | 80 | 88 | 85 | 83 | 85 |
| Durability | 100 | 92 | 95 | 99 | 100 | 100 | 99 | 97 | 95 | 97 | 95 | 98 | 98 |

| | | | | | | | | | | | | | |
|---|---|---|---|---|---|---|---|---|---|---|---|---|---|
| *1: Percentage of the formed area of the barrier layer to the overall area of the interface between the reinforcing rubber layer and adjacent rubber compound. *2: Surface to which the vulcanizing adhesive forming the barrier layer was applied in the manufacturing process. | | | | | | | | | | | | | |

The composition of each of the rubber compound [A] and rubber compound B listed in Table 1 is shown in Table 2.

**Table 2**

| Composition | (parts by mass) | rubber compound [A] | rubber compound B |
|---|---|---|---|
| Natural Rubber (NR) | | 0 | 80 |
| Butadiene Rubber (BR) | | 100 | 20 |
| Carbon Black | | 0 | 40 |
| Metal salt of alpha beta unsaturated carboxylic acid (zinc methacrylate) | | 40 | 0 |
| Peroxide | | 1 | 0 |
| Sulfur | | 0 | 3 |
| Vulcanizing Accelerator | | 0 | 1.5 |
| Zinc Oxide | | 0 | 3 |

Specifically, the ingredients of the rubber compounds shown in Table 2 were as follows.
Natural rubber (NR):
   RSS#3
Butadinene rubber (BR):
   BR150B manufactured by ube industries, Ltd.
Carbon black:
   DIABLACK E (FEF) manufactured by Mitsubishi Chemical Corporation
zinc methacrylate:
   SAN-ESTER SK-30 manufactured by Sanshin Chemical Industry Co., Ltd.
Peroxide:
   PERCUMYL D (dicumyl peroxide) manufactured by NOF Corporation
zinc oxide:
   zinc Oxide #2 manufactured by Mitsui Mining and Smelting Co., Ltd.
Sulfur:
   Powder Sulfur manufactured by Karuizawa Sulfur Co., Ltd.
vulcanizing accelerator:
   NOCCELER NS (N-tert-butyl-2-benzothiazolyl sulfenamide) manufactured by Ouchi Shinko Chemical Industrial Co., Ltd.

As shown in Table 1, it was confirmed that the tires as the working examples were improved in the durability while securing the excellent steering stability and decreasing the rolling resistance.

### Reference Signs List

- 1: airless tire
- 2: tread ring
- 3: hub
- 4: spoke
- 5: outer reinforcing cord layer
- 6: inner reinforcing cord layer
- 7: reinforcing rubber layer
- 10: adjacent rubber compound
- 11: barrier layer
- 21: ground contacting surface
- 22: tread rubber layer
- G: topping rubber

## Claims

1. An airless tire (1) comprising
a cylindrical tread ring (2) forming a ground contacting surface (21) of the tire,
a hub (3) disposed radially inside the tread ring (2) and fixed to an axle of a vehicle, and
spokes (4) connecting the tread ring (2) and the hub (3), wherein
the tread ring (2) comprises a tread rubber layer (22) forming the ground contacting surface (21) of the tire (1), and a reinforcing rubber layer (7) disposed radially inside the tread rubber layer (22), **characterized in that**
the reinforcing rubber layer (7) is made of a rubber compound [A] comprising: 100 parts by mass of a rubber component containing 10 to 100 % by mass of butadiene rubber; 10 to 80 parts by mass of a metal salt of an alpha beta unsaturated carboxylic acid; and a peroxide,
an adjacent rubber compound (10), which is made from a sulfur-vulcanized rubber compound using sulfur as a vulcanizing agent, is disposed adjacent to the reinforcing rubber layer (7) and comprises 0.5 to 10.0 part by weight of sulfur with respect to 100 parts by mass of the rubber component, and
a barrier layer (11), which is formed from a rubber-based adhesive or a resin-based adhesive and restrains a part of the sulfur in the adjacent rubber compound (10) from migrating into the reinforcing rubber layer (7) during vulcanization, is disposed between the reinforcing rubber layer (7) and the adjacent rubber compound (10).

2. The airless tire (1) according to claim 1, wherein the adhesive from which the barrier layer (11) is formed is a vulcanizing adhesive.

3. The airless tire (1) according to claim 1 or 2, wherein the thickness of the barrier layer (11) is in a range from 1 to 100 micrometers.

4. The airless tire according to any one of claims 1-3, wherein the barrier layer is disposed over at least 90 % of the entire interface between the reinforcing rubber layer and the adjacent rubber compound.

5. The airless tire (1) according to any one of claims 1-4, wherein the tread ring (2) comprises a radially outer reinforcing cord layer (5) disposed radially outside the reinforcing rubber layer (7), and a radially inner reinforcing cord layer (6) disposed radially inside the reinforcing rubber layer (7).

6. The airless tire (1) according to claim 5, wherein the inner reinforcing cord layer (6) is composed of a third cord ply (61) of third reinforcing cords (66) laid parallel with each other and coated with a topping rubber G.

7. The airless tire (1) according to claim 6, wherein the third reinforcing cords (66) are substantially parallel with the tire circumferential direction, which means that an angle of the third reinforcing cords (66) with respect to the tire circumferential direction is in a range from -5 to +5 degrees.

8. The airless tire (1) according to claim 6, wherein the third reinforcing cords (66) of the third cord ply (61) constituting the inner reinforcing cord layer (6) are laid in substantially parallel with the tire axial direction, which means that an angle of the third reinforcing cords (66) with respect to the tire axial direction is in a range from -5 to +5 degrees.

9. The airless tire (1) according to claim 5, wherein the outer reinforcing cord layer (5) further includes a fourth cord ply (53) disposed on the radially outer side of the second cord ply (52) and wherein the fourth cord ply (53) includes fourth reinforcing cords (58) laid substantially parallel with the tire circumferential direction, which means that an alge of the fourth reinforcing cords (58) with respect to the tire circumferential direction is in a range from -5 to +5 degrees.

10. The airless tire (1) according to claim 9, wherein the outer reinforcing cord layer (5) further includes a fifth cord ply (54) disposed on the radially inner side of the first cord ply (51) includes fifth reinforcing cords (59) laid substantially parallel with the circumferential direction, which means that an angle of the fifths reinforcing cords (59) with respect to the tire circumferential direction is in a range of - 5 to +5 degrees.

11. The airless tire (1) according to claim 9 and claim 10, wherein the fourth cord ply (53) is disposed radially outside the second cord ply (52) and the fifth cord ply (54) is disposed radially inside the first cord ply (51).

## Patentansprüche

1. Luftloser Reifen (1), umfassend
einen zylindrischen Laufflächenring (2), der eine Bodenkontaktfläche (21) des Reifens bildet,
eine Nabe (3), die radial innerhalb des Laufflächenrings (2) angeordnet und an einer Achse eines Fahrzeugs befestigt ist, und
Speichen (4), die den Laufflächenring (2) und die Nabe (3) verbinden,
wobei
der Laufflächenring (2) eine Laufflächenkautschukschicht (22) umfasst, die die Bodenkontaktfläche (21) des Reifens (1) bildet, und eine Verstärkungskautschukschicht (7), die radial innerhalb der Laufflächenkautschukschicht (22) angeordnet ist, **dadurch gekennzeichnet, dass**
die Verstärkungskautschukschicht (7) aus einer Kautschukmischung [A] hergestellt ist, die umfasst: 100 Masseteile einer Kautschukkomponente, die 10 bis 100 Masse-% Butadienkautschuk enthält; 10 bis 80 Masseteile eines Metallsalzes einer alpha-beta-ungesättigten Carbonsäure; und ein Peroxid,
eine benachbarte Kautschukmischung (10), die aus einer schwefelvulkanisierten Kautschukmischung unter Verwendung von Schwefel als Vulkanisationsmittel hergestellt ist, benachbart zu der Verstärkungskautschukschicht (7) angeordnet ist und 0,5 bis 10,0 Gewichtsteile Schwefel bezogen auf 100 Masseteile der Kautschukkomponente umfasst, und
eine Barriereschicht (11), die aus einem Klebstoff auf Kautschukbasis oder einem Klebstoff auf Harzbasis gebildet ist und einen Teil des Schwefels in der benachbarten Kautschukmischung (10) daran hindert, während der Vulkanisation in die Verstärkungskautschukschicht (7) zu migrieren, zwischen der Verstärkungskautschukschicht (7) und der benachbarten Kautschukmischung (10) angeordnet ist.

2. Luftloser Reifen (1) nach Anspruch 1, wobei der Klebstoff, aus dem die Barriereschicht (11) gebildet ist, ein vulkanisierender Klebstoff ist.

3. Luftloser Reifen (1) nach Anspruch 1 oder 2, wobei die Dicke der Barriereschicht (11) in einem Bereich von 1 bis 100 Mikrometern liegt.

4. Luftloser Reifen (1) nach einem der Ansprüche 1-3, wobei die Barriereschicht über mindestens 90 % der gesamten Grenzfläche zwischen der Verstärkungskautschukschicht und der benachbarten Kautschukmischung angeordnet ist.

5. Luftloser Reifen (1) nach einem der Ansprüche 1-4, wobei der Laufring (2) eine radial äußere Verstärkungskordschicht (5), die radial außerhalb der Verstärkungskautschukschicht (7) angeordnet ist, und eine radial innere Verstärkungskordschicht (6) umfasst, die radial innerhalb der Verstärkungskautschukschicht (7) angeordnet ist.

6. Luftloser Reifen (1) nach Anspruch 5, wobei die innere Verstärkungskordschicht (6) aus einer dritten Kordlage (61) aus dritten Verstärkungskorden (66) besteht, die parallel zueinander angeordnet und mit einem Gummierungskautschuk G beschichtet sind.

7. Luftloser Reifen (1) nach Anspruch 6, wobei die dritten Verstärkungskorde (66) im Wesentlichen parallel zu der Reifenumfangsrichtung sind, was bedeutet, dass ein Winkel der dritten Verstärkungskorde (66) in Bezug auf die Reifenumfangsrichtung in einem Bereich von -5 bis +5 Grad liegt.

8. Luftloser Reifen (1) nach Anspruch 6, wobei die dritten Verstärkungskorde (66) der dritten Kordlage (61), die die innere Verstärkungskordschicht (6) bilden, im Wesentlichen parallel zu der Reifenaxialrichtung gelegt sind, was bedeutet, dass ein Winkel der dritten Verstärkungskorde (66) in Bezug auf die Reifenaxialrichtung in einem Bereich von -5 bis +5 Grad liegt.

9. Luftloser Reifen (1) nach Anspruch 5, wobei die äußere Verstärkungskordschicht (5) ferner eine vierte Kordlage (53) umfasst, die auf der radial äußeren Seite der zweiten Kordlage (52) angeordnet ist, und wobei die vierte Kordlage (53) vierte Verstärkungskorde (58) umfasst, die im Wesentlichen parallel zu der Reifenumfangsrichtung gelegt sind, was bedeutet, dass ein Winkel der vierten Verstärkungskorde (58) in Bezug auf die Reifenumfangsrichtung in einem Bereich von -5 bis +5 Grad liegt.

10. Luftloser Reifen (1) nach Anspruch 9, wobei die äußere Verstärkungskordschicht (5) ferner eine fünfte Kordlage (54) umfasst, die auf der radial inneren Seite der ersten Kordlage (51) angeordnet ist, und fünfte Verstärkungskorde (59) umfasst, die im Wesentlichen parallel zu der Umfangsrichtung gelegt sind, was bedeutet, dass ein Winkel der fünften Verstärkungskorde (59) in Bezug auf die Reifenumfangsrichtung in einem Bereich von -5 bis +5 Grad liegt.

11. Luftloser Reifen (1) nach Anspruch 9 und Anspruch 10, wobei die vierte Kordlage (53) radial außerhalb der zweiten Kordlage (52) angeordnet ist, und die fünfte Kordlage (54) radial innerhalb der ersten Kordlage (51) angeordnet ist.

## Revendications

1. Bandage sans air (1) comprenant
un anneau de roulement cylindrique (2) formant une surface de contact au sol (21) du bandage,
un moyeu (3) disposé radialement à l'intérieur de l'anneau de roulement (2) et fixé à un essieu d'un véhicule, et
des rayons (4) qui relient l'anneau de roulement (2) et le moyeu (3), dans lequel
l'anneau de roulement (2) comprend une couche de caoutchouc de roulement (22) formant la surface de contact au sol (21) du bandage (1), et
une couche de caoutchouc de renforcement (7) disposée radialement à l'intérieur de la couche de caoutchouc de roulement (2),
**caractérisé en ce que**
la couche de caoutchouc de renforcement (7) est faite d'un composé de caoutchouc [A] comprenant : 100 parties en masse d'un composant de caoutchouc contenant 10 à 100 % en masse de caoutchouc au butadiène ; 10 à 80 parties en masse d'un sel métallique d'un acide carboxylique insaturé alpha bêta ; et un peroxyde,
un composé de caoutchouc adjacent (10), qui est réalisé à partir d'un composé de caoutchouc vulcanisé au soufre en utilisant du soufre comme agent de vulcanisation, est disposé adjacent à la couche de caoutchouc de renforcement (7) et comprend de 0,5 à 10,0 parties en poids de soufre par rapport à 100 parties en masse du composant de caoutchouc, et
une couche barrière (1) qui est formée à partir d'un adhésif à base de caoutchouc ou d'un adhésif à base de résine et qui restreint une partie du soufre dans le composé de caoutchouc adjacent (10) à l'encontre d'une migration jusque dans la couche de caoutchouc de renforcement (7) pendant la vulcanisation, est disposée entre la couche de caoutchouc de renforcement (7) et le composé de caoutchouc adjacent (10).

2. Bandage sans air (1) selon la revendication 1,
dans lequel l'adhésif à partir duquel la couche barrière (11) est formée est un adhésif de vulcanisation.

3. Bandage sans air (1) selon la revendication 1 ou 2,
dans lequel l'épaisseur de la couche barrière (11) est dans une plage de 1 à 100 µm.

4. Bandage sans air selon l'une quelconque des revendications 1 à 3,
dans lequel la couche barrière est disposée par-dessus au moins 90 % de l'interface entière entre la couche de caoutchouc de renforcement et le composé de caoutchouc adjacent.

5. Bandage sans air (1) selon l'une quelconque des revendications 1 à 4,
dans lequel l'anneau de roulement (2) comprend une couche de câblés de renforcement (5) radialement extérieure, disposée radialement à l'extérieur de la couche de caoutchouc de renforcement (7), et une couche de câblés de renforcement (6) radialement intérieure, disposée radialement à l'intérieur de la couche de caoutchouc de renforcement (7).

6. Bandage sans air (1) selon la revendication 5,
dans lequel la couche de câblés de renforcement intérieur (6) est composée d'une troisième nappe de câblés (61) de troisièmes câblés de renforcement (66) posés parallèlement les uns aux autres et revêtus d'un caoutchouc d'enrobage (G).

7. Bandage sans air (1) selon la revendication 6,
dans lequel les troisièmes câblés de renforcement (66) sont sensiblement parallèles à la direction circonférentielle du bandage, ce qui signifie qu'un angle des troisièmes câblés de renforcement (66) par rapport à la direction circonférentielle du bandage est dans une plage de -5 à +5°.

8. Bandage sans air (1) selon la revendication 6,
dans lequel les troisièmes câblés de renforcement (66) de la troisième nappe de câblés (61) constituant la couche de câblés de renforcement intérieure (6) sont posés sensiblement parallèlement à la direction axiale du bandage, ce qui signifie que l'angle des troisièmes câblés de renforcement (66) par rapport à la direction axiale du bandage est dans une plage de -5 à +5°.

9. Bandage sans air (1) selon la revendication 5,
dans lequel la couche de câblés de renforcement extérieure (5) inclut en outre une quatrième nappe de câblés (53) disposée sur le côté radialement extérieur de la seconde nappe de câblés (52), et dans lequel la quatrième nappe de câblés (53) inclut des quatrièmes câblés de renforcement (58) posés sensiblement parallèlement à la direction circonférentielle du bandage, ce qui signifie qu'un angle des quatrièmes câblés de renforcement (58) par rapport à la direction circonférentielle du bandage est dans une plage de -5 à +5°.

10. Bandage sans air (1) selon la revendication 9,
dans lequel la couche de câblés de renforcement extérieure (5) inclut en outre une cinquième nappe de câblés (54) disposée sur le côté radialement intérieur de la première nappe de câblés (51) et incluant des cinquièmes câblés de renforcement (59) posés sensiblement parallèlement à la direction circonférentielle, ce qui signifie qu'un angle des cinquièmes câblés de renforcement (59) par rapport à la direction circonférentielle du bandage est dans une plage de - 5 à +5°.

11. Bandage sans air (1) selon la revendication 9 et la revendication 10,
dans lequel la quatrième nappe de câblés (53) est disposée radialement à l'extérieur de la seconde nappe de câblés (52) et la cinquième nappe de câblés (56) est disposée radialement à l'intérieur de la première nappe de câblés (51).
